# EUROPEAN PATENT APPLICATION

(11) **EP 4 394 957 A1**
(43) Date of publication of application: **03.07.2024**
(21) Application number: 22883402.4
(22) Date of filing: 11.10.2022
(51) Int. Cl.: H01M 8/04228, H01M 8/04303, H01M 8/04537, H01M 8/04746, H01M 8/10

(54) **FUEL CELL UNIT**

(30) Priority: 21.10.2021 JP 2021172124
(71) Applicant: BROTHER KOGYO KABUSHIKI KAISHA, Nagoya-shi, Aichi 467-8561 (JP)
(72) Inventor: TANNO, Norihiko, Nagoya-shi, Aichi 467-8562 (JP)
(74) Representative: Prüfer & Partner mbB Patentanwälte · Rechtsanwälte
(86) International application number: PCT/JP2022/037804
(87) International publication number: WO 2023/068098

(57) **Abstract**

Provided is a fuel cell unit that can prevent degradation in performance even when the fuel cell is stored for a long time. In the fuel cell unit, in a state where a stack is not supplying electric power to an external load, an air supply channel is closed by an air supply valve (S17) and an air discharge channel is closed by an air discharge valve (S 19) to interrupt supply of the air to a cathode electrode. In the fuel cell unit, a hydrogen discharge channel is closed by a hydrogen discharge valve (S21) and a hydrogen supply channel is opened by a hydrogen supply valve (S23) to supply hydrogen to an anode electrode. In the fuel cell unit, the hydrogen supply channel is closed by the hydrogen supply valve (S25) to interrupt the supply of the hydrogen to the anode electrode. Subsequent to the interruption of the supply of the hydrogen, the fuel cell unit waits until a stack voltage reaches a level lower than a certain voltage threshold. The stack voltage is measured by a voltage measuring unit.

## Description

### TECHNICAL FIELD

The present invention relates to a fuel cell unit.

### BACKGROUND

In a case where an oxide film is formed on a catalyst of a cathode electrode of a fuel cell, performance of the fuel cell is degraded. Thus, there has been proposed a technique for removing the oxide film from the catalyst to activate the catalyst. Patent Literature 1 discloses a method for activating a catalyst for a fuel cell. In the catalyst activation method, a catalyst on a cathode electrode is activated by the following procedure. First, hydrogen is sealed in an anode electrode and an air supply line side of the cathode electrode is sealed. Then, an air exhaust line side of the cathode electrode is opened to the atmosphere. Thereafter, the air exhaust line side of the cathode electrode is sealed and maintained in this state. As a result, a cell voltage is lowered to a level equal to or lower than a reduction potential of the oxide film formed on the catalyst of the cathode electrode, thereby activating the catalyst of the cathode electrode.

### Citation List

### Patent Literature

Patent Literature 1: Japanese Patent No. 6614120

### SUMMARY

### Technical Problem

In the catalyst activation method disclosed in Patent Literature 1, hydrogen is sealed in the anode electrode in the state where the air exhaust line side of the cathode electrode is opened to the atmosphere. Thus, the hydrogen that has permeated into the cathode electrode may be discharged from the exhaust line, or air may intrude into the fuel cell through the exhaust line. For example, in a case where the fuel cell is stored for a long time in this state without generating electric power, the catalyst is again oxidized by air, and the performance of the fuel cell may be degraded.

An object of the present invention is to provide a fuel cell unit that can prevent degradation in performance even when the fuel cell is stored for a long time.

### Solution to Problem

A fuel cell unit according to the present invention includes a stack, a plurality of channels, a plurality of valves, a voltage measuring unit, and a controller. The stack includes at least one cell including an anode electrode, a cathode electrode, and a catalyst. The plurality of channels includes a hydrogen supply channel for supplying hydrogen to the anode electrode, a hydrogen discharge channel for discharging the hydrogen from the anode electrode, an air supply channel for supplying air to the cathode electrode, and an air discharge channel for discharging the air from the cathode electrode. The plurality of valves includes a hydrogen supply valve configured to open and close the hydrogen supply channel, a hydrogen discharge valve configured to open and close the hydrogen discharge channel, an air supply valve configured to open and close the air supply channel, and an air discharge valve configured to open and close the air discharge channel. The voltage measuring unit is configured to measure a stack voltage between the anode electrode and the cathode electrode of the stack. The controller is configured to control the plurality of valves to open and close the plurality of channels, respectively. The controller is configured to, in a state where the stack is not supplying electric power to an external load, execute air interruption for interrupting supply of air to a cathode electrode, hydrogen supply for supplying hydrogen to an anode electrode, hydrogen interruption for interrupting the supply of the hydrogen to the anode electrode, and first waiting. The air interruption includes controlling the air supply valve to close the air supply channel and controlling the air discharge valve to close the air discharge channel. The hydrogen supply includes controlling the hydrogen discharge valve to close the hydrogen discharge channel and controlling the hydrogen supply valve to open the hydrogen supply channel. The hydrogen interruption includes controlling the hydrogen supply valve to close the hydrogen supply channel. The first waiting includes waiting until a stack voltage reaches a level lower than a certain voltage threshold, the stack voltage being measured by the voltage measuring unit.

The fuel cell unit waits until the stack voltage reaches the level lower than the voltage threshold in a state where the stack is filled with hydrogen and air. At this time, the oxidized portion of the catalyst is reduced by the hydrogen and activated. In the process of the supply of the hydrogen to the stack, the air supply channel and the air discharge channel are closed. Thus, air is not allowed to intrude into the stack through the air supply channel and the air discharge channel. Consequently, degradation in performance of the fuel cell unit can be prevented although the fuel cell unit is stored for a long time without supplying electric power to the external load.

### BRIEF DESCRIPTION OF THE DRAWINGS

[FIG. 1] FIG. 1 is a diagram illustrating an overview of a fuel cell unit 1.
[FIG. 2] FIG. 2 is a graph indicating a change over time in stack power (maximum) of the fuel cell 1A.
[FIG. 3] FIG. 3 is a graph indicating a change over time over time in reaction overpotential of the fuel cell 1A.
[FIG. 4] FIG. 4 is a block diagram illustrating an electrical configuration of a controller 6.
[FIG. 5] FIG. 5 is a flowchart of a main process.
[FIG. 6] FIG. 6 is a graph indicating a change over time in stack voltage of the fuel cell 1A.
[FIG. 7] FIG. 7 is a graph indicating a change over time in stack power of the fuel cell 1A.
[FIG. 8] FIG. 8 is a flowchart of an electric power generation process.

### DETAILED DESCRIPTION

An embodiment of a fuel cell unit 1 according to the present invention will be described with reference to the drawings. The drawings to be referred to are used for explaining technical features that can be adopted by the present invention, and configurations of devices and the like disclosed herein are not intended to be limited to the drawings but are merely examples for explanation.

### <Overview of Fuel Cell Unit 1>

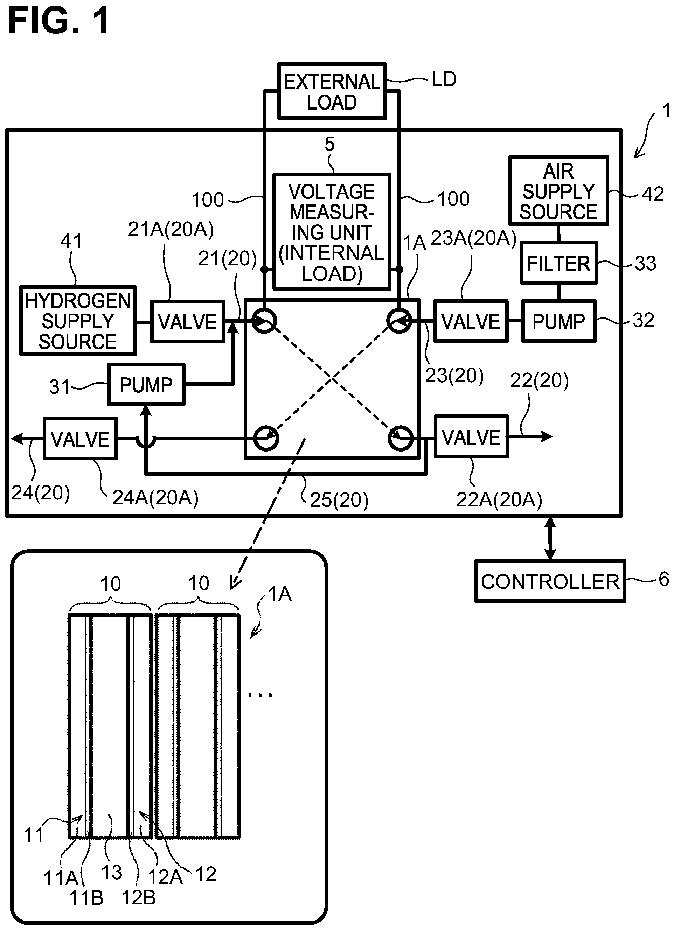

Referring to FIG. 1, a description will be provided on an overview of a fuel cell unit 1. The fuel cell unit 1 includes a fuel cell 1A, a plurality of channels 20, a plurality of valves 20A, a pump 31, a pump 32, a filter 33, a hydrogen supply source 41, an air supply source 42, a voltage measuring unit 5, and a controller 6.

The fuel cell 1A has a stacked structure in which sixteen (16) cells 10 are stacked. The adjacent cells 10 are separated from each other by a separator (not illustrated). Each cell 10 includes an anode 11, a cathode 12, and an electrolyte (e.g., a solid polymer electrolyte membrane) 13. The electrolyte 13 is disposed between the anode 11 and the cathode 12. The anode 11 includes an anode electrode 11A and an anode catalyst 11B. The cathode 12 includes a cathode electrode 12A and a cathode catalyst 12B. The anode electrode 11A and the cathode electrode 12A are electrodes. The anode catalyst 11B and the cathode catalyst 12B are made of, for example, platinum supported on acetylene black. The materials for the anode catalyst 11B and the cathode catalyst 12B are not limited to the material disclosed as the example, and other materials may be used for the anode catalyst 11B and the cathode catalyst 12B. The separators have a plate shape and are disposed between the cells 10, respectively. Each separator has a hydrogen channel on one side and an oxidant channel on the other side. The hydrogen channel faces the anode electrode 11A of a corresponding cell 10. The oxidant channel faces the cathode electrode 12A of the corresponding cell 10. In the present embodiment, air is used as the oxidant.

The sixteen cells 10 are connected in series with each other. The fuel cell 1A outputs voltage to output terminals 100. The voltage outputted to the output terminals 100 is equal to a sum of voltages, each of which is a voltage between the anode electrode 11A and the cathode electrode 12A of each cell 10. Hereinafter, such a voltage is referred to as a "stack voltage". The fuel cell unit 1 applies a stack voltage to an external load Ld connected to the output terminals 100 externally, thereby supplying electric power to the external load Ld.

The hydrogen supply source 41 is a hydrogen inlet and functions as a supply source of hydrogen to be consumed in the fuel cell 1A. For example, the hydrogen supply source 41 is connected to a hydrogen tank (not illustrated) to admit hydrogen from the hydrogen tank. The hydrogen supply source 41 may be connected to a water electrolysis device instead of the hydrogen tank. The air supply source 42 is an air inlet and functions as a supply source of air to be consumed in the fuel cell 1A. For example, the air supply source 42 admits air in the atmosphere. The air supply source 42 may be connected to an air tank or a water electrolysis device instead. Pressure of hydrogen that is discharged from the hydrogen supply source 41 is set to be higher than pressure of air that is discharged from the air supply source 42.

The plurality of channels 20 include a hydrogen supply channel 21, a hydrogen discharge channel 22, an air supply channel 23, an air discharge channel 24, and a hydrogen circulation channel 25. The hydrogen supply channel 21, the hydrogen discharge channel 22, and the hydrogen circulation channel 25 are pipes that allow hydrogen to flow therethrough. The hydrogen supply channel 21 allows hydrogen to be supplied from the hydrogen supply source 41 to the anode electrode 11A of each cell 10. The hydrogen discharge channel 22 allows hydrogen to be discharged from the anode electrode 11A of each cell 10. The hydrogen circulation channel 25 allows hydrogen flowing through the hydrogen discharge channel 22 to flow toward the hydrogen supply channel 21 outside a stack of the fuel cell 1A, thereby circulating the hydrogen that has not been consumed in the cells 10 to return to the hydrogen supply channel 21. The air supply channel 23 and the air discharge channel 24 are pipes that allows air to flow therethrough. The air supply channel 23 allows air to be supplied from the air supply source 42 to the cathode electrode 12A of each cell 10. The air discharge channel 24 allows air to be discharged from the cathode electrode 12A of each cell 10.

The pump 31 is disposed at the hydrogen circulation channel 25. The pump 31 causes hydrogen to flow from the hydrogen discharge channel 22 toward the hydrogen supply channel 21 in the hydrogen circulation channel 25. The pump 32 is disposed at the air supply channel 23. The pump 32 causes air to flow from the air supply source 42 toward the cathode electrode 12A of each cell 10 in the air supply channel 23. The filter 33 is disposed at a particular position between the air supply source 42 and the pump 32 in the air supply channel 23. The filter 33 removes impurities from the air flowing through the air supply channel 23.

The plurality of valves 20A include a hydrogen supply valve 21A, a hydrogen discharge valve 22A, an air supply valve 23A, and an air discharge valve 24A. The hydrogen supply valve 21A is disposed at the hydrogen supply channel 21. The hydrogen supply valve 21A is an electromagnetic valve that can open and close the hydrogen supply channel 21. The hydrogen discharge valve 22A is disposed at the hydrogen discharge channel 22. The hydrogen discharge valve 22A is an electromagnetic valve that can open and close the hydrogen discharge channel 22. The air supply valve 23A is disposed at the air supply channel 23. The air supply valve 23A is an electromagnetic valve that can open and close the air supply channel 23. The air discharge valve 24A is disposed at the air discharge channel 24. The air discharge value 24A is an electromagnetic value that can open and close the air discharge channel 24.

The voltage measuring unit 5 includes a voltage dividing resistor and an AD converter. The voltage dividing resistor is connected to the output terminals 100 and divides a stack voltage. The AD converter is driven by electric power generated by the fuel cell 1A. The AD converter can be driven by, for example, voltage of about 2 V. The AD converter is connected to the voltage dividing resistor. The AD converter converts a voltage between ends of the voltage dividing resistor into digital data and outputs the digital data. The voltage dividing resistor and the AD converter correspond to an internal load connected to the fuel cell 1A inside the fuel cell unit 1. The controller 6 is a well-known personal computer, and controls the entire fuel cell unit 1.

### <Principle of Electric Power Generation in Fuel Cell 1A>

In each cell 10, the anode electrode 11A of the anode 11 is supplied with hydrogen from the hydrogen supply source 41 through the hydrogen supply channel 21. Hydrogen is decomposed into hydrogen ions and electrons by the anode catalyst 11B of the anode 11. The hydrogen ions flow through the electrolyte 13 toward the cathode 12. The electrons flow toward the cathode electrode 12A of the cathode 12 through the output terminals 100 and the external load Ld. Thus, the external load Ld is supplied with electric power.

The cathode electrode 12A of the cathode 12 is supplied with air from the air supply source 42 through the air supply channel 23. The hydrogen ions that have come from the anode 11 via the electrolyte 13, the electrons that have come from the anode 11 via the output terminals 100, and oxygen molecules in the air are combined at the cathode catalyst 12B of the cathode 12, thereby generating water.

### <Degradation in Performance of Fuel Cell 1A>

In a case where the fuel cell 1A is stored without the external load Ld connected to the output terminals 100, the cathode catalyst 12B may be degraded by oxidation due to air. If such a case occurs, performance of the fuel cell 1A is degraded.

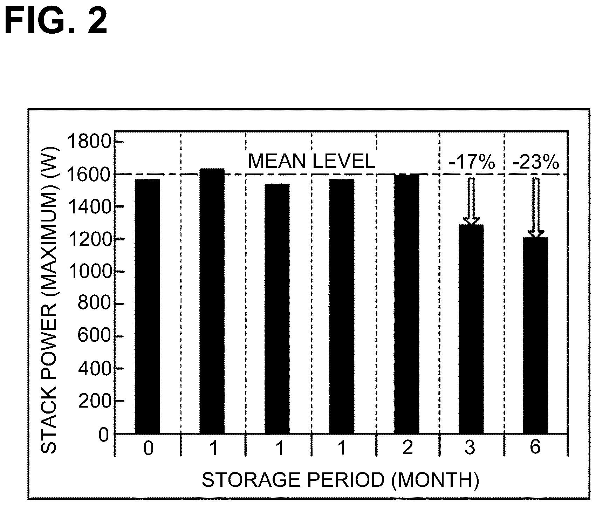

FIG. 2 shows a change over time in maximum electric power output by the fuel cell 1A (hereinafter, referred to as "stack power"). A horizontal axis in FIG. 2 represents a storage period of the fuel cell 1A from the time when the fuel cell 1A generates electric power for the first time. The maximum stack power of the fuel cell 1A is measured three times in total after storage period of one month.

As shown in FIG. 2, the maximum stack power is at approximately 1600 W after storage period of zero months, one month, and two months for the fuel cell 1A, and is substantially constant in these periods. A single dot and chain line represents a mean level of the maximum stack powers after storage period of zero months, one month, and two months for the fuel cell 1A. The maximum stack power decreases by about 17% with respect to the mean level after storage period of three months for the fuel cell 1A. The maximum stack power decreases by about 23% with respect to the mean level after storage period of six months for the fuel cell 1A.

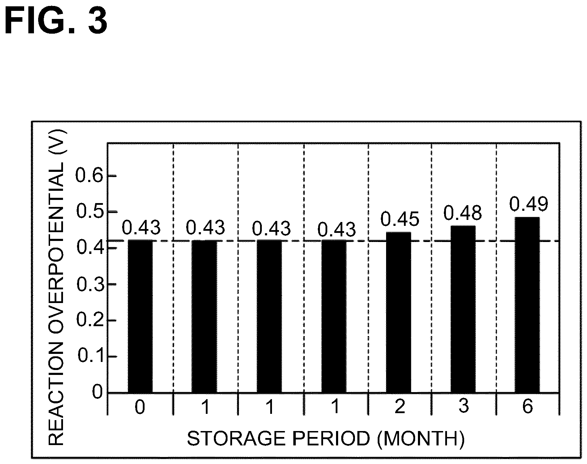

FIG. 3 shows a change over time in reaction overpotential of the fuel cell 1A. The reaction overpotential is an indicator indicating a state of the fuel cell 1A. The smaller the reaction overpotential, the better the performance of the fuel cell 1A.

As shown in FIG. 3, the reaction overpotential is 0.43 V after storage period of zero months, one month, and two months for the fuel cell 1A, and is substantially constant in these periods. The reaction overpotential is 0.45 V after storage period of two months for the fuel cell 1A, 0.48 V after storage period of three months for the fuel cell 1A, and 0.49 V after storage period of six months for the fuel cell 1A. In these periods, the reaction overpotential is greater than the reaction overpotential after storage period of zero months and the reaction overpotential after storage period of one month.

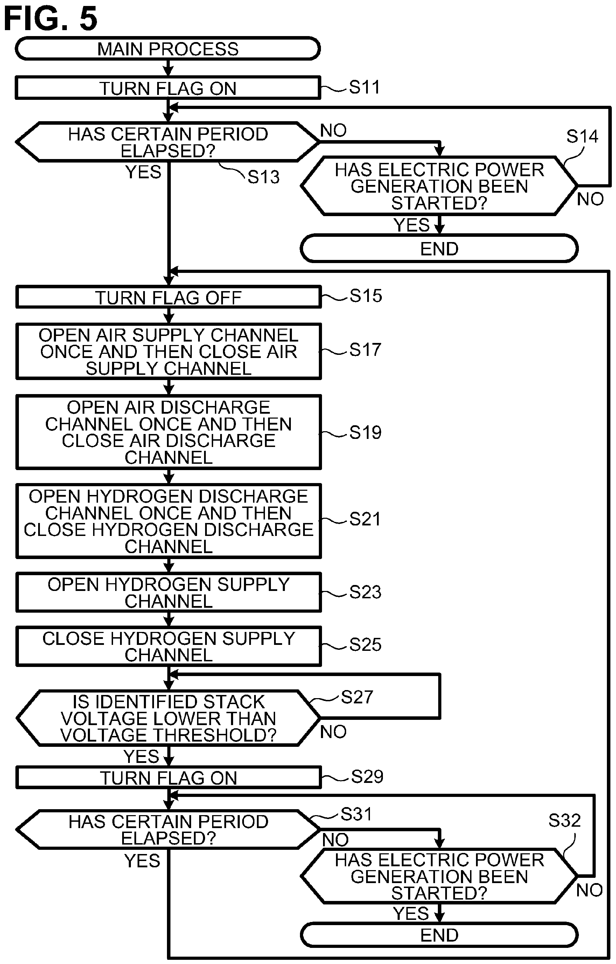

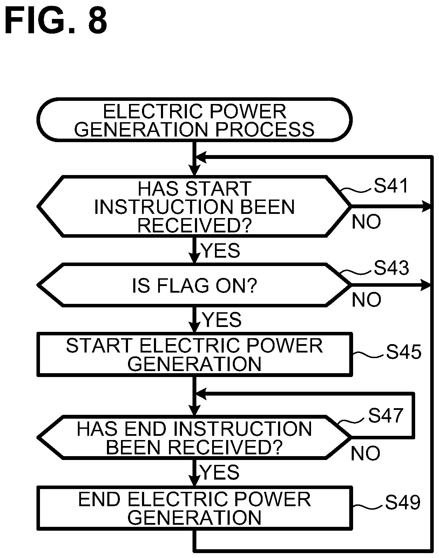

The changes in the indicators (the maximum stack power and the reaction overpotential) shown in FIGS. 2 and 3 are presumed to be caused by oxidation of the cathode catalyst 12B. From this result, it is understood that the cathode catalyst 12B deteriorates significantly after storage period of at least three months for the fuel cell 1A. In contrast, in the present embodiment, the fuel cell unit 1 executes a main process (refer to FIG. 5) and an electric power generation process (refer to FIG. 8), which will be described later, in order to prevent degradation in the performance of the fuel cell 1A that is stored without the external load Ld being not connected to the output terminals 100.

### <Electrical Configuration of Controller 6>

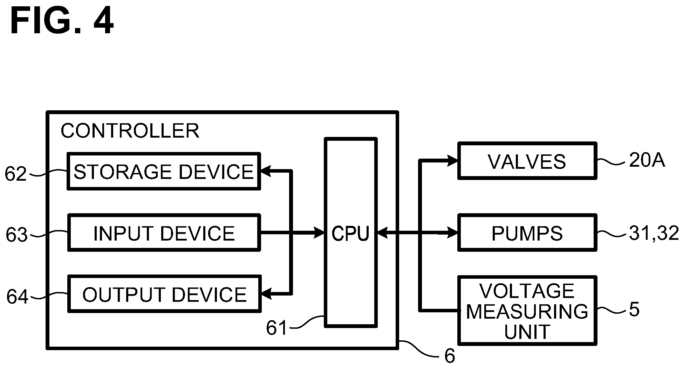

Referring to FIG. 4, a description will be provided on an electrical configuration of the controller 6. The controller 6 includes a CPU 61, a storage device 62, an input device 63, and an output device 64. The CPU 61 is electrically connected to the storage device 62, the input device 63, the output device 64, the plurality of valves 20A, the pump 31, the pump 32, and the voltage measuring unit 5.

The CPU 61 controls the fuel cell unit 1 including the controller 6. The storage device 62 stores programs for the CPU 61 to execute the main process (refer to FIG. 5) and the electric power generation process (refer to FIG. 8), which will be described later. The storage device 62 stores a flag to be used in the main process and the electric power generation process. The flag indicates whether the fuel cell 1A is in a state in which the fuel cell 1A can supply electric power to the external load Ld. Hereinafter, a state where "a value of the flag is 1 (one)" is referred to as "the flag is ON". A state where "the value of the flag is 0 (zero)" is referred to as "the flag is OFF". When the flag is ON, the fuel cell 1A is in the state in which the fuel cell 1A can supply electric power to the external load Ld. When the flag is OFF, the fuel cell 1A is in a state in which the fuel cell 1A cannot supply electric power to the external load Ld.

The storage device 62 stores a certain period Td as a period specified in advance. A value for the certain period Td is not particularly limited, but is specified as, for example, three months that is equal to the storage period of the fuel cell 1A in which the cathode catalyst 12B is significantly degraded.

The storage device 62 stores a voltage threshold Vh as a certain voltage threshold. A value for the voltage threshold Vh is not particularly limited, but is specified as, for example, a value greater than a voltage lower limit during electric power generation by the fuel cell 1A (hereinafter, simply referred to as the "voltage lower limit"). More specifically, the voltage threshold Vh is specified as follows. Since the voltage lower limit of each of the sixteen cells 10 included in the fuel cell 1A is 0.1 V, the voltage lower limit of a stack of the sixteen cells 10 connected in series is 1.6 V (= 0.1 × 16). Thus, the voltage threshold Vh is specified to be a value (e.g., 2.2 V) greater than the voltage lower limit of 1.6 V.

The input device 63 is a keyboard, and receives an input operation to the fuel cell unit 1. The output device 64 is a display, and outputs the state of the fuel cell unit 1 and other information.

The CPU 61 controls the pump 31 to cause hydrogen in the hydrogen discharge channel 22 to flow toward the hydrogen supply channel 21 through the hydrogen circulation channel 25. The CPU 61 controls the pump 32 to cause air to flow from the air supply source 42 toward the cathode electrode 12A of each cell 10 through the air supply channel 23. The CPU 61 controls the plurality of valves 20A to open and close the plurality of channels 20.

The CPU 61 receives digital data output from the AD converter of the voltage measuring unit 5. The CPU 61 identifies the voltage between the ends of the voltage dividing resistor of the voltage measuring unit 5 based on the received digital data, thereby identifying a stack voltage of the fuel cell 1A based on the identified voltage.

### <Main Process>

Referring to FIG. 5, a description will be provided on the main process. The main process starts in response to the CPU 61 executing the program read from the storage device 62 while the fuel cell 1A is in a storage state in which the fuel cell 1A has been stored after manufacturing and the fuel cell 1A has not yet supplied electric power to the external load Ld or in another storage state in which the fuel cell 1A is stored with the external load Ld being not connected to the output terminals 100 after electric power generation is finished. At this time, the hydrogen supply channel 21 is closed by the hydrogen supply valve 21A, the hydrogen discharge channel 22 is closed by the hydrogen discharge valve 22A, the air supply channel 23 is closed by the air supply valve 23A, and the air discharge channel 24 is closed by the air discharge valve 24A.

The CPU 61 turns the flag ON stored in the storage device 62 to indicate that the fuel cell 1A is in the state in which the fuel cell 1A can supply electric power to the external load Ld (S11). The CPU 61 determines whether the certain period Td has elapsed since the CPU 61 turns the flag ON in S11 (S13). If the CPU 61 determines that the certain period Td has not elapsed (S13:NO), the CPU 61 moves the process to S14. The CPU 61 determines whether electric power generation has been started by S45 of the electric power generation process (refer to FIG. 8) described later (S14). If the CPU 61 determines that the electric power generation has been started (S14:YES), the CPU 61 ends the main process. In this case, the main process is started in the storage state in which the fuel cell 1A is stored with the external load Ld being not connected to the output terminals 100 after the electric power generation is finished by S49 of the electric power generation process (refer to FIG. 8) described later. If the CPU 61 determines that the electric power generation has not been started (S14:NO), the CPU 61 returns the process to S13. The CPU 61 waits while repeating the determination in S 14 until the certain period Td elapses since the flag is turned ON. In the meantime, the fuel cell 1A is maintained in the state in which the fuel cell 1A can supply electric power to the external load Ld.

When the certain period Td has elapsed since the CPU 61 turns the flag ON, the storage period of the fuel cell 1A has exceeded the certain period Td. Thus, the cathode catalyst 12B may be oxidized. Therefore, if the CPU 61 determines that the certain period Td has elapsed since the CPU 61 turns the flag ON (S13:YES), the CPU 61 turns the flag OFF to indicate that the fuel cell 1A is in the state in which the fuel cell 1A cannot supply electric power to the external load Ld (S15).

The CPU 61 executes S17 to S27 in order to reduce and activate the oxidized cathode catalyst 12B. The CPU 61 controls the air supply value 23A to open the air supply channel 23 once and then close the air supply channel 23 (S17). Next, the CPU 61 controls the air discharge valve 24A to open the air discharge channel 24 once and then close the air discharge channel 24 (S19). With such a valve control, the air to the cathode electrodes 12A is interrupted.

The CPU 61 controls the hydrogen discharge valve 22A to open the hydrogen discharge channel 22 once and then close the hydrogen discharge channel 22 (S21). Next, the CPU 61 controls the hydrogen supply valve 21A to open the hydrogen supply channel 21 (S23). With such a valve control, the hydrogen is supplied to the anode electrodes 11A while the air supply channel 23 and the air discharge channel 24 are closed. The hydrogen supply source 41 stores therein hydrogen whose pressure is higher than at least the pressure of the air in the cathode electrodes 12A. Thus, the anode electrodes 11A are supplied with the hydrogen whose pressure is higher than the pressure of the air in the cathode electrodes 12A.

Thereafter, the CPU61 controls the hydrogen supply valve 21A to close the hydrogen supply channel 21 (S25). With such a valve control, the hydrogen to the anode electrodes 11A is interrupted.

In the fuel cell 1A, in response to the anode electrodes 11A being supplied with the hydrogen during S23 to S25, a potential difference occurs between the anode electrode 11A and the cathode catalyst 12B deteriorated by oxygen in the air remaining the cathode electrode 12A and oxidization, and the stack voltage thus rises temporarily. Thereafter, hydrogen ions that are generated by decomposition of the hydrogen supplied to the anode electrode 11A reach the cathode 12 through the electrolyte 13, and thus the oxidized cathode catalyst 12B reacts with the hydrogen ions. At the same time, some of the supplied hydrogen molecules permeates the electrolyte 13 and reaches the cathode electrode 12A, and contact and reduce the cathode catalyst 12B deteriorated by oxidation. By these phenomena, the oxidized cathode catalyst 12B is reduced, and the cathode catalyst 12B is activated. The anode electrode 11A is supplied with the hydrogen whose pressure is higher than the pressure of the air in the cathode electrode 12A. Thus, as activation of the cathode catalyst 12B proceeds, the cathode electrode 12A is filled with the hydrogen that has permeated from the anode electrode 11A as well as the hydrogen in the air. This keeps the cathode catalyst 12B activated and thus the stack voltage lowers. In response to the stack voltage lowering to below the voltage threshold Vh, the CPU 61 determines that the oxidized cathode catalyst 12B have been sufficiently reduced.

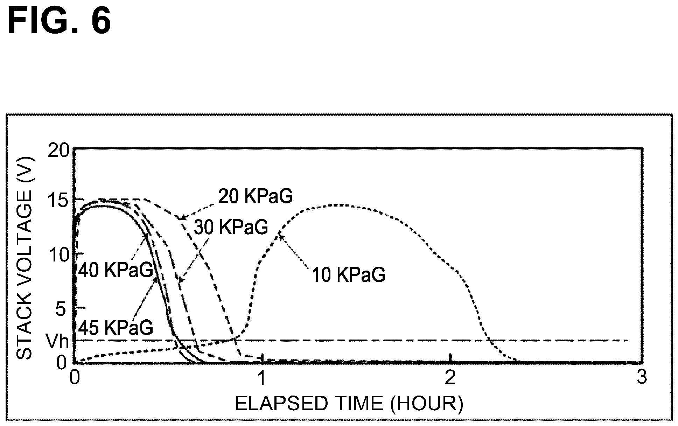

FIG. 6 shows a relationship between the stack voltage and an elapsed time after the hydrogen is supplied to the anode electrode 11A during S23 to S25. FIG. 6 shows a change over time in stack voltage for respective cases where the pressure of the hydrogen supplied to the anode electrode 11A is at 45 KPaG, at 40 KPaG, at 30 KPaG, at 20 KPaG, and at 10 KPaG.

As shown in FIG. 6, after the anode electrode 11A is supplied with the hydrogen, the stack voltage temporarily rises to about 15 V and then lowers to below the voltage threshold Vh. As compared with the cases where the pressure of the hydrogen is at 45 KPaG, at 40 KPaG, at 30 KPaG, and at 20 KPaG, the time required for the stack voltage to start rising and the time required for the stack voltage to lower to below the voltage threshold Vh are longer than those when the pressure of the hydrogen is at 10 KPaG. Thus, in order to quickly reduce and stably activate the oxidized cathode catalyst 12B, the pressure of the hydrogen to be supplied to the anode electrode 11A during S23 to S25 is preferably 20 KPaG or greater.

In response to the stack voltage temporarily rising due to the supply of the hydrogen to the anode electrode 11A during S23 to S25, the AD converter of the voltage measuring unit 5 starts to be driven by the electric power of the fuel cell 1A. The CPU 61 receives the digital data output from the AD converter that has started driving. As shown in FIG. 5, the CPU 61 identifies the stack voltage of the fuel cell 1A based on the received digital data. The CPU 61 determines whether the identified stack voltage is lower than the voltage threshold Vh (S27). If the CPU 61 determines that the identified stack voltage is equal to or higher than the voltage threshold Vh (S27:NO), the CPU 61 returns the process to S27. The CPU 61 waits until the stack voltage reaches a level lower than the voltage threshold Vh.

If the CPU 61 determines that the identified stack voltage is lower than the voltage threshold Vh (S27:YES), the CPU 61 determines that the oxidized cathode catalyst 12B is sufficiently reduced. In response to this, the CPU 61 turns the flag ON to indicate that the fuel cell 1A is in the state in which the fuel cell 1A can supply electric power to the external load Ld (S29).

The CPU 61 determines whether the certain period Td has elapsed since the CPU 61 turns the flag ON in S11 (S31). If the CPU 61 determines that the certain period Td has not elapsed (S31:NO), the CPU 61 moves the process to S32. The CPU 61 determines whether electric power generation has been started by S45 of the electric power generation process (refer to FIG. 8) described later (S32). If the CPU 61 determines that the electric power generation has been started (S32:YES), the CPU 61 ends the main process. In this case, the main process is started in the storage state in which the fuel cell 1A is stored with the external load Ld being not connected to the output terminals 100 after the electric power generation is finished by S49 of the electric power generation process (refer to FIG. 8) described later. If the CPU 61 determines that the electric power generation has not been started (S32:NO), the CPU 61 returns the process to S31. The CPU 61 waits while repeating the determination in S32 until the certain period Td elapses since the flag is turned ON. In the meantime, the fuel cell 1A is maintained in the state in which the fuel cell 1A can supply electric power to the external load Ld. The hydrogen supply channel 21, the hydrogen discharge channel 22, the air supply channel 23, and the air discharge channel 24 are maintained in the closed state.

If the CPU 61 determines that the certain period Td has elapsed since the CPU 61 turns the flag ON (S31:YES), the CPU 61 returns the process to S15. The CPU 61 repeats S15 to S29 again. Thus, the process for reducing the oxidized cathode catalyst 12B is repeatedly executed at the cycle of the certain period Td.

Insufficient sealing for the cathode electrode 12A or deterioration of the sealing for the cathode electrode 12A may cause intrusion of outside air into the cathode electrode 12A, thereby causing deterioration of the cathode catalyst 12B by oxidization. Although such a case happens, repeating S15 to S29 at the cycle of the certain period Td enables reactivation of the cathode catalyst 12B during storage of the fuel cell 1A. The performance of the fuel cell 1A thus can be maintained for a long period of time.

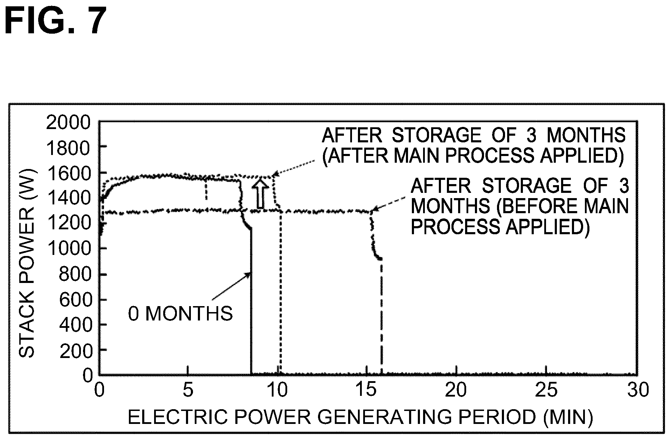

FIG. 7 shows a change over time in stack power of the fuel cell 1A. The horizontal axis of FIG. 7 represents an elapsed time from the start of electric power generation by the fuel cell 1A.

The stack power of the fuel cell 1A that has not yet supplied electric power to the external load Ld and whose storage period is zero months is about 1600 W at the maximum. Before the main process is applied to the fuel cell 1A, the stack power of the fuel cell 1A that has been stored for three months without supplying electric power to the external load Ld is about 1250 W at the maximum, which is about 22% less than that in the case where the storage period of the fuel cell 1A is zero months. After the main process is applied to the fuel cell 1A, the stack power of the fuel cell 1A that has been stored for three months without supplying electric power to the external load Ld is about 1600 W at the maximum, which is substantially equal to that in the case where the storage period of the fuel cell 1A is zero months. From this result, it is understood that even in the case of the fuel cell 1A that has been stored for three months without supplying electric power to the external load Ld, executing the main process enables the oxidized cathode catalyst 12B to be sufficiently reduced, thereby activating the cathode catalyst 12B.

### <Electric Power Generation Process>

Referring to FIG. 8, a description will be provided on the electric power generation process. In response to the CPU 61 executing the program read from the storage device 62, the electric power generation process starts at the same timing as the timing at which the main process (refer to FIG. 5) starts. The electric power generation process is executed in parallel with the main process.

The CPU 61 determines whether a start instruction for starting electric power supply from the fuel cell 1A to the external load Ld has been received via the input device 63 (S41). If the CPU 61 determines that the start instruction has not been received (S41:NO), the CPU 61 returns the process to S41. The CPU 61 then waits until the start instruction is received.

If the CPU 61 determines that the start instruction has been received via the input device 63 (S41:YES), the CPU 61 determines whether the flag is ON (S43). If the CPU 61 determines that the flag is OFF (S43:NO), the fuel cell 1A is in the state in which the fuel cell 1A cannot supply electric power to the external load Ld. The CPU 61 thus returns the process to S41. In this case, electric power generation is not performed by the fuel cell 1A, and electric power is not supplied to the external load Ld. If the CPU 61 determines that the flag is ON (S43:YES), the fuel cell 1A is in the state in which the fuel cell 1A can supply electric power to the external load Ld. The CPU 61 thus moves the process to S45.

The external load Ld is connected to the output terminals 100. The CPU 61 executes the following processing to start electric power generation (S45).

The CPU 61 controls the air supply value 23A to open the air supply channel 23 and drives the pump 32. Thus, the supply of air to the cathode electrode 12A is started. The CPU 61 controls the air discharge value 24A to open the air discharge channel 24. Thus, the nitrogen and hydrogen remaining in the cathode electrode 12A is discharged by the supplied air. In addition, the CPU 61 controls the hydrogen supply valve 21A to open the hydrogen supply channel 21. Thus, the supply of hydrogen to the anode electrode 11A is started. The CPU 61 controls the hydrogen discharge valve 22A to open the hydrogen discharge channel 22. Thereafter, the CPU 61 controls the hydrogen discharge valve 22A to close the hydrogen discharge channel 22 and drives the pump 31 to start circulation of the hydrogen to the anode electrode 11A. Thus, unreacted hydrogen of the hydrogen supplied to the anode electrode 11A is reused without being discharged.

The hydrogen supplied to the anode electrode 11A is decomposed into hydrogen ions and electrons by the anode catalyst 11B. The electrons flow toward the cathode electrode 12A through the output terminals 100 and the external load Ld. Thus, electric power is supplied to the external load Ld. The hydrogen ions that have come from the anode 11 via the electrolyte 13, the electrons that have come from the anode 11 via the output terminals 100, and oxygen molecules in the air are combined at the cathode catalyst 12B of the cathode 12, thereby generating water.

The CPU 61 determines whether an end instruction for ending the electric power supply to the external load Ld has been received via the input device 63 (S47). If the CPU 61 determines that the end instruction has not been received (S47:NO), the CPU 61 returns the process to S47. The CPU 61 continues the electric power generation until the CPU 61 determines that the end instruction has been received.

If the CPU 61 determines that the end command has been received via the input device 63 (S47:YES), the CPU 61 controls the air supply valve 23A to close the air supply channel 23. The CPU 61 controls the air discharge value 24A to close the air discharge channel 24. Thus, the supply of air to the cathode electrode 12A is interrupted. In addition, the CPU 61 controls the hydrogen supply valve 21A to close the hydrogen supply channel 21. The CPU 61 controls the hydrogen discharge valve 22A to close the hydrogen discharge channel 22. Thus, the supply of hydrogen to the anode electrode 11A is interrupted. The CPU 61 thus ends the electric power generation (S49). Then, the CPU 61 returns the process to S41.

### <Effects of Present Embodiment>

The fuel cell unit 1 waits until the stack voltage reaches a level lower than the voltage threshold Vh (S27) in a state where the stack is filled with hydrogen and air (S17 to S25). At this time, the oxidized cathode catalyst 12B is reduced and activated by the hydrogen ions. In the process of the supply of the hydrogen to the fuel cell 1A, the air supply channel 23 and the air discharge channel 24 are closed (S17, S19). Thus, air is not allowed to intrude into the fuel cell 1A through the air supply channel 23 and the air discharge channel 24. Consequently, in the fuel cell unit 1, degradation in performance of the fuel cell 1A can be prevented although the fuel cell unit 1 is stored for a long time without the external load Ld being connected to the output terminals 100.

In the fuel cell unit 1, the anode electrode 11A is supplied with hydrogen that is at a pressure higher than that of air in the cathode electrode 12A by S23. In this case, in the fuel cell unit 1, the anode electrode 11A is appropriately supplied with the hydrogen and backflow of the hydrogen can be prevented. Further, the hydrogen that is at a pressure higher than that of the air in the cathode electrode 12A is supplied to the anode electrode 11A. Thus, the hydrogen molecules permeate the cathode 12 and can react with the oxidized cathode catalyst 12B.

In the fuel cell unit 1, if the CPU 61 determines that the stack voltage is lower than the voltage threshold Vh (S27:YES), the CPU 61 turns the flag ON to indicate that the fuel cell 1A is in the state in which the fuel cell 1A can supply electric power to the external load Ld (S29). The CPU 61 waits in this state until the certain period Td elapses (S31). In the meantime, the hydrogen supply channel 21, the hydrogen discharge channel 22, the air supply channel 23, and the air discharge channel 24 are maintained in the closed state. In this case, the fuel cell 1A is maintained in the state where the fuel cell 1A is filled with the hydrogen and air and the intrusion of air into the fuel cell 1A is prevented until the electric power supply to the external load Ld is started after the oxidized cathode catalyst 12B is activated. Consequently, in the fuel cell unit 1, oxidation of the cathode catalyst 12B caused by air before electric power supply to the external load Ld is started can be prevented.

In the fuel cell unit 1, the voltage threshold Vh is specified to be 2.2 V that is greater than 1.6 V, which is the voltage lower limit of the stack of the sixteen cells 10. In this case, in the fuel cell unit 1, the cells 10 can be prevented from being damaged due to the stack voltage becoming equal to or lower than the voltage threshold Vh. In the fuel cell unit 1, the fuel cell 1A can be maintained in the state of generating electric power while the oxidized cathode catalyst 12B is being reduced by the hydrogen ions (S27). In this case, the reaction for both the reduction of the oxidized cathode catalyst 12B and the electric power generation occur, and thus oxygen in the air in the fuel cell 1A can be efficiently consumed. In this case, the amount of air remaining in the fuel cell 1A during storage can be reduced. The fuel cell unit 1 thus can prevent oxidation of the cathode catalyst 12B caused by air during storage.

Contrary to the processing order of S17 and S19 in the main process, if the air discharge channel 24 is opened and closed before the air supply channel 23 is opened and closed, impurities in the air intrude into the cathode electrode 12A through the air discharge channel 24. Nevertheless, the fuel cell unit 1 causes the air supply channel 23 to be opened and closed before opening and closing of the air discharge channel 24. The filter 33 is disposed at the air supply channel 23. Impurities in the air flowing through the air supply channel 23 are thus removed by the filter 33. Consequently, in the fuel cell unit 1, the intrusion of impurities into the cathode electrode 12A through the air supply channel 23 can be prevented.

In the fuel cell unit 1, in a case where the stack voltage is lower than the voltage threshold Vh (S27:YES) and the certain period Td has elapsed since the flag was turned ON (S31:YES), the CPU 61 executes the processing for reducing the oxidized cathode catalyst 12B (S15 to S29). Thus, in a case where the fuel cell unit 1 is stored for the certain period Td or longer, the cathode catalyst 12B is repeatedly activated at the cycle of the certain period Td. Consequently, in the fuel cell unit 1, degradation in performance of the fuel cell 1A can be prevented although the fuel cell unit 1 is stored for a long time.

In the fuel cell unit 1, the voltage measuring unit 5 is driven by electric power generated by the fuel cell 1A during the reduction of the oxidized cathode catalyst 12B by the hydrogen ions. That is, the electric power generated during the activation of the cathode catalyst 12B is consumed by the voltage measuring unit 5. In this case, the reaction for both the reduction of the oxidized cathode catalyst 12B and the electric power generation occur, and thus oxygen in the air in the fuel cell 1A can be efficiently consumed. Consequently, in the fuel cell unit 1, the cathode catalyst 12B can be prevented from being oxidized in the process of waiting until the stack voltage reaches a level lower than the voltage threshold Vh.

### <Modifications>

The present invention is not limited to the above-described embodiment, and various modifications are possible. The number of cells 10 included in the fuel cell 1A is not limited to that disclosed in the above embodiment. The fuel cell 1A may include 1 to 15, 17, or more cells 10. The plurality of valves 20A are not limited to the electromagnetic valves, but may be other mechanisms that can open and close the plurality of channels 20. The controller 6 of the fuel cell unit 1 is not limited to a personal computer. For example, the controller 6 may be a control box that controls the entire fuel cell unit 1.

The CPU 61 may identify the voltage between the anode electrode 11A and the cathode electrode 12A of any one of the sixteen cells 10 of the fuel cell 1A based on the digital data output by the voltage measuring unit 5. The CPU 61 may wait in S27 until the identified voltage reaches a level lower than 0.1 V that is the voltage lower limit of a single cell 10.

The CPU 61 may simultaneously execute S17 and S19 of the main process. That is, the air supply channel 23 and the air discharge channel 24 may be closed at the same time. The CPU 61 may replace the order of executing S21 and S23 in the main processing. That is, the hydrogen discharge channel 22 may be closed after the hydrogen supply channel 21 is opened.

In a case where the stack voltage does not continue to be lower than the voltage threshold Vh for a certain period in S27 of the main process, the CPU 61 may display, on the output device 64, a screen for notifying that an abnormal event has occurred in the fuel cell 1A.

The certain period Td is not limited to three months, but may be, for example, one, two, or four months. The CPU 61 may set a different certain period Td depending on to the elapse of the storage period of the fuel cell 1A. In one example, the CPU 61 may set a longer certain period Td as the storage period of the fuel cell 1A in the state in which the fuel cell 1A has been stored after manufacturing and the fuel cell 1A has not yet supplied electric power to the external load Ld becomes longer. In another example, the certain period Td used as the determination reference in S13 may be set to be longer than the certain period Td used as the determination reference in S31. In still another example, the certain period Td used as the determination reference in S13 may be set to be shorter than the certain period Td used as the determination reference in S31.

The voltage threshold Vh is not limited to 2.2 V. In one example, the voltage threshold Vh may be any value greater than 1.6 V that is the voltage lower limit of the stack of the sixteen cells 10. In another example, the voltage threshold Vh may be 1.6 V or lower, for example, 0 V. The CPU 61 may set a different voltage threshold Vh depending on the elapse of the storage period of the fuel cell 1A. For example, the CPU 61 may set a lower voltage threshold Vh as the storage period of the fuel cell 1A in the state in which the fuel cell 1A has been stored after manufacturing and the fuel cell 1A has not yet supplied electric power to the external load Ld becomes longer.

The fuel cell unit 1 may include a pump at the hydrogen supply channel 21. The pump may be used for supplying hydrogen from the hydrogen supply source 41 to the anode electrode 11A so that the hydrogen that is at a pressure higher than the air in the cathode electrode 12A is supplied to the anode electrode 11A.

The CPU 61 may open the hydrogen discharge channel 22 to discharge the hydrogen from the fuel cell 1A at any timing between the timing when determining that the stack voltage is lower than the voltage threshold Vh (S27:YES) and the timing when determining that the certain period Td has elapsed (S31).

As the filter 33, a filter suitable for impurities to be removed, such as a screen filter or a depth filter, may be used as appropriate.

The CPU 61 might not necessarily execute S15 to S29 of the main process at the cycle of the certain period Td. For example, the CPU 61 may execute S15 to S29 and activate the cathode catalyst 12B after the CPU 61 receives the start instruction to start electric power generation and before supply of electric power to the external load Ld is started.

The AD converter of the voltage measuring unit 5 might not necessarily be driven by electric power generated by the fuel cell 1A. For example, the voltage measuring unit 5 may be driven by power of the controller 6.

In response to turning the flag ON in S11 or S29 of the main process, the CPU 61 may start electric power generation to supply the generated electric power to the external load Ld regardless of whether the start command has been received via the input device 63.

### <Others>

The CPU 61 is an example of a "controller" of the present invention. S17 and S19 are an example of "air interruption" of the present invention. S21 and S23 are an example of "hydrogen supply" of the present invention. S25 is an example of "hydrogen supply" of the present invention. S27 is an example of "first waiting" of the present invention.

### Reference Signs List

1: fuel cell unit
1A: fuel cell
5: voltage measuring unit
10: cell
11A: anode electrode
11B: anode catalyst
12A: cathode electrode
12B: cathode catalyst
21: hydrogen supply channel
21A: hydrogen supply valve
22: hydrogen discharge channel
22A: hydrogen discharge valve
23: air supply channel
23A: air supply valve
24: air discharge channel
24A: air discharge valve
33: filter
61: CPU

## Claims

1. A fuel cell unit comprising:
a stack including at least one cell including an anode electrode, a cathode electrode, and a catalyst;
a plurality of channels including:
a hydrogen supply channel for supplying hydrogen to the anode electrode;
a hydrogen discharge channel for discharging the hydrogen from the anode electrode;
an air supply channel for supplying air to the cathode electrode; and
an air discharge channel for discharging the air from the cathode electrode;
a plurality of valves including:
a hydrogen supply valve configured to open and close the hydrogen supply channel;
a hydrogen discharge valve configured to open and close the hydrogen discharge channel;
an air supply valve configured to open and close the air supply channel; and
an air discharge valve configured to open and close the air discharge channel;
a voltage measuring unit configured to measure a stack voltage between the anode electrode and the cathode electrode of the stack; and
a controller configured to control the plurality of valves to open and close the plurality of channels, respectively,
wherein the controller is configured to, in a state where the stack is not supplying electric power to an external load, execute:
air interruption for interrupting supply of the air to the cathode electrode, the air interruption including controlling the air supply valve to close the air supply channel and controlling the air discharge valve to close the air discharge channel;
subsequent to the air interruption to interrupt the supply of the air to the cathode electrode, hydrogen supply for supplying the hydrogen to the anode electrode, the hydrogen supply including controlling the hydrogen discharge valve to close the hydrogen discharge channel and controlling the hydrogen supply valve to open the hydrogen supply channel;
subsequent to the hydrogen supply to supply the hydrogen to the anode electrode, hydrogen interruption for interrupting the supply of the hydrogen to the anode electrode, the hydrogen interruption including controlling the hydrogen supply valve to close the hydrogen supply channel; and
subsequent to the hydrogen interruption to interrupt the supply of the hydrogen to the anode electrode, first waiting including waiting until a stack voltage reaches a level lower than a certain voltage threshold, the stack voltage being measured by the voltage measuring unit.

2. The fuel cell unit according to claim 1,
wherein the hydrogen to be supplied to the anode electrode in the hydrogen supply is at a higher pressure than a pressure of the air in the cathode.

3. The fuel cell unit according to claim 1 or 2,
wherein the controller is further configured to, in response to the stack voltage having reached a level lower than the certain voltage threshold in the first waiting, execute second waiting including waiting in a state where the stack can supply electric power to the external load, and
wherein the controller maintains the state where the plurality of channels are closed during the second waiting.

4. The fuel cell unit according to any one of claims 1 to 3,
wherein the voltage threshold is greater than a voltage lower limit of the stack.

5. The fuel cell unit according to any one of claims 1 to 4,
wherein a filter is disposed at the air supply channel, and
wherein, in the air interruption, the controller executes the controlling the air discharge valve to close the air discharge channel subsequent to the controlling the air supply valve to close the air supply channel.

6. The fuel cell unit according to any one of claims 1 to 5,
wherein the controller is further configured to:
in response to the stack voltage having reached the level lower than the certain voltage threshold in the first waiting, determine whether a certain period has elapsed, and
in response to determining that the certain period has elapsed, execute the air interruption, the hydrogen supply, the hydrogen interruption, and the first processing again.

7. The fuel cell unit according to any one of claims 1 to 6,
wherein, in the first waiting, the stack voltage is measured by the voltage measuring unit driven by electric power generated by the stack.
